# EUROPEAN PATENT APPLICATION

(11) **EP 1 439 395 A1**
(43) Date of publication of application: **21.07.2004**
(21) Application number: 04000890.6
(22) Date of filing: 16.01.2004
(51) Int. Cl.: G01P 3/487, G01D 5/14, G01D 5/16, H02K 1/27

(54) **Pulse wheel control device**

(30) Priority: 20.01.2003 IT TO20030024
(71) Applicant: RFT S.p.A., 10121 Torino (IT)
(72) Inventor: Nervo, Aurelio, 10122 Torino (IT); Visconti, Alberto, 21100 Varese (IT)
(74) Representative: Fioravanti, Corrado

(57) **Abstract**

A control device is disclosed for controlling the amount of a physical quantity in accordance with a prescribed periodic function (f) for driving a controlled device (D). The control device comprises a pulse wheel device including:
- a magnetized member (10) fixable to a rotatable member (R) and comprising zones magnetized with opposite polarities (N, S) in predetermined angular zones, and
- an associated transducer (T) for generating an analog signal that varies as the angular position of the rotatable magnetized member (10) varies.

The zones magnetized with opposite polarities (N, S) are arranged in such manner that at every revolution of the rotatable member a magnetic flux linked with the transducer (T) varies responsive to the angular position of the rotatable member, in a manner corresponding to the pattern of the function (f) in a period. Thereby the electric signal provided by the transducer (T) can be directly used for driving the controlled device (D).

## Description

The present invention refers to a pulse wheel control device for driving a controlled device, for example a device located at a position remote from the control device, and which is to be driven according to a prescribed function or law.

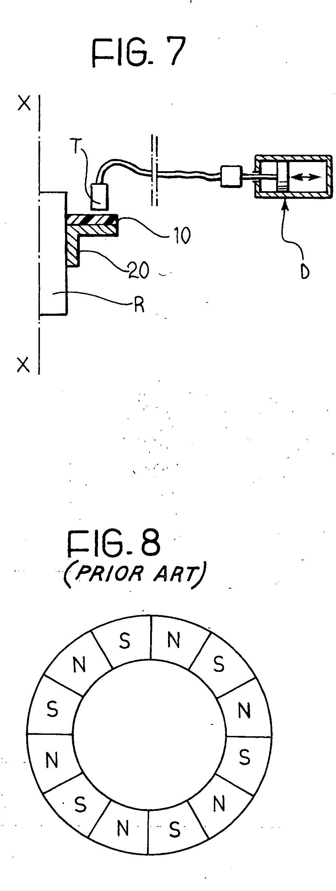

There are known pulse wheels comprising a plastoferrite ring fixed to a metal annular shield mounted to a rotatable member to be kept under control, for example a drive shaft or the hub of a motor vehicle wheel. The plastoferrite ring is polarized magnetically to form, in predetermined angular zones or fields, a sequence of suitably alternate and/or spaced north/south poles, as shown in figure 8. The magnetic properties are given to the pulse wheel through an apparatus that permanently magnetizes the ferrite in predetermined zones with the desired polar orientation.

The pulse wheel operatively faces an associated magnetoelectric transducer mounted on a fixed part. As the rotatable member rotates, the magnetic flux linked by the transducer varies as the magnetized zones pass in front of the transducer, which provides electric pulses indicative of the rotation (angular position, speed, acceleration, etc.) of the rotatable member. The electric signals provided by the transducer are transmitted to an electronic processing unit and processed by this in order to obtain information concerning the movement of the rotatable member. A pulse wheel of the above kind is disclosed in EP-0 745 857 A1.

A general object of the present invention is to provide a pulse wheel control device applicable in various fields of the industry and, particularly but not exclusively, in the automotive field for driving controlled devices such as, for example, brakes, clutches, gearboxes, members of the timing system (camshafts), etc.

A specific object of the invention is to provide a controlled device which is reliable, accurate, and which allows to optimize and reduce bulk and mass as compared to conventional controlled devices.

A few preferred but not limiting embodiments of the invention will now be described with reference to the attended drawings, in which:
- Figures 1 to 4: are views of rings magnetized in accordance with four embodiments of the invention, respectively;
- Figure 5: is a schematic view in axial cross section of a rotatable member to which there is mounted a magnetized ring of disc shape of the kind shown in figures 1-4;
- Figure 6: is a schematic view in axial cross section of a rotatable member on which there is mounted a magnetized ring of cylindrical shape;
- Figure 7: schematically illustrates a control device according to the invention and a controlled device to be driven; and
- Figure 8: is a view of a conventional pulse wheel.

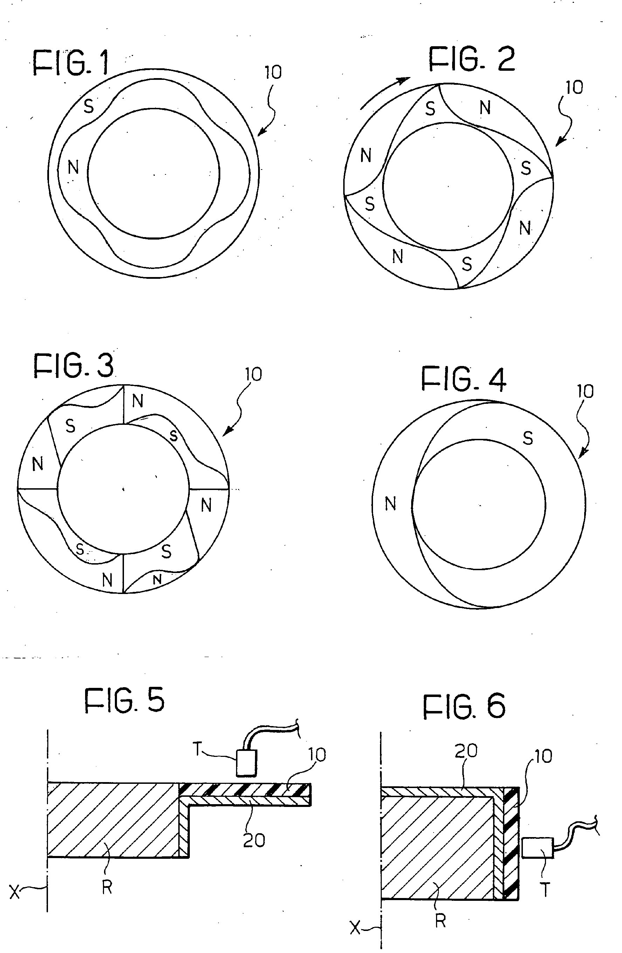

With reference initially to figure 1, a controlled device according to the invention comprises a magnetized ring 10 preferably made of plastoferrite and/or rubber with a high content of ferrite co-molded or fixed in another way to an annular metal supporting shield 20 fastened to a rotatable member R about an axis of rotation x, for example a propeller shaft or a ring of a bearing. The magnetized ring 10 has permanently magnetized fields with north N and south S polarities arranged as described herein after.

The magnetized ring 10 operatively faces a sensor or a magnetoelectric transducer T mounted to a fixed part (not shown) and adapted for generating an electric analog output signal.

Indicated D in figure 7 is a controlled device that is to be driven according to a periodic law or function f. In the illustrated example, the controlled device D is a piston device. Naturally, reference to this possible field of use should not be interpreted as in any way limiting the scope of the patent.

When the member R rotates, the magnetic flux linked by the transducer T varies as the magnetized zones pass in front of the transducer, which provides an analog electric signal that is used for driving the controlled device D according to the function f.

According to the invention, the zones N, S magnetized with opposite polarities are distributed along the ring 10 such that the magnetic flux linked with the transducer T varies at every revolution of the rotatable member R as a function of the angular position of the member R, in a manner corresponding to the pattern of the function f in a period. In this way the analog electric signal provided by the transducer T can be directly used for driving the controlled device D.

In the example of figure 1, the ring 10 is magnetized with a pair of poles N, S distributed along the ring according to a sinusoidal pattern so as to yield a corresponding electric analog signal of sinusoidal type output from the transducer T.

In the example of figure 2, the ring 10 is magnetized with four pairs of poles N, S distributed along the ring according to a pattern such that, when the ring 10 rotates in the direction indicated by the arrow, in an arc of 90° the electric output signal from the transducer T will have an intensity that varies between a minimum and a maximum in accordance with a function that comprises increasing and decreasing portions having different lengths and different increments or decrements.

It will be understood that, according to the requirements for driving the controlled device, the distribution of the pair or pairs of poles N, S on the magnetized ring may virtually take any pattern. By suitably distributing the zones with opposite magnetic polarizations, one can generate driving signals in accordance with continuous or discrete functions, linear functions or functions of a higher order. The period of a function according to which the controlled device is to be driven may correspond to an arc of 360° of the magnetized ring 10 as in the example of figure 4, or an arc of limited extent as in the examples of figures 1-3.

Naturally, depending on the applications, the output signal of the transducer may also be used for detecting data of rotation (angular position, speed, acceleration, etc.) of the rotatable member, and not only for coordinating in synchronized manner the movements of the controlled device D with the rotation of the rotatable member R.

It is to be understood that the invention is not limited to the embodiments described and illustrated herein which are to be considered as constructional examples of the pulse wheel controlled device. Rather, the invention is likely to undergo modifications as to the shape and location of parts, constructional and functional details. For example, the magnetized ring may be an annular disc element for an axial kind of reading as shown in figure 5, or a cylindrical annular member for a radial kind of reading as shown in figure 6.

## Claims

1. A control device for controlling the amount of a physical quantity in accordance with a prescribed periodic function (f) for driving a controlled device (D), the control device comprising a pulse wheel device including:
- a magnetized member (10) fixable to a rotatable member (R) and provided with permanent magnet means (N, S) in predetermined angular zones, and
- an associated transducer (T) for generating an analog signal varying as the angular position of the rotatable magnetized member (10) varies;
**characterized in that** the permanent magnet means (N, S) are arranged in such manner that at every revolution of the rotatable member a magnetic flux linked with the transducer (T) varies responsive to the angular position of said rotatable member, in a manner corresponding to the pattern of said function (f) in a period, whereby the electric signal provided by the transducer (T) can be directly used for driving the controlled device (D).

2. A control device according to claim 1, **characterized in that** the magnetized member (10) is a ring with zones magnetized with opposite polarities (N, S).

3. A control device according to claim 2, **characterized in that** the magnetized ring (10) comprises a plurality of pairs of zones magnetized with opposite polarities (N, S).

4. A control device according to claim 2, **characterized in that** the magnetized ring (10) comprises one pair of zones magnetized with opposite polarities (N, S).

5. A control device according to claim 2, **characterized in that** said zones magnetized with opposite polarities (N, S) are distributed in variable manner along the ring (10) such that, at every revolution of the rotatable member, the magnetic flux linked with the transducer (T) varies responsive to the angular position of the ring, in a manner corresponding to the pattern of said function (f) in a period.

6. A control device according to claim 1, **characterized in that** the magnetized member (10) comprises magnetized ferrite.

7. A control device according to claim 2, **characterized in that** the period of the function (f), according to which the controlled device (D) is to be driven, corresponds to an arc of 360° of the magnetized ring (10).

8. A control device according to claim 2, **characterized in that** the period of the function (f), according to which the controlled device (D) is to be driven, corresponds to a fraction of an arc of 360° of the magnetized ring (10).
